# EUROPEAN PATENT APPLICATION

(11) **EP 4 722 838 A1**
(43) Date of publication of application: **08.04.2026**
(21) Application number: 25204537.2
(22) Date of filing: 25.09.2025
(51) Int. Cl.: G05D 1/228, G05D 1/617, G05D 1/695, G05D 105/45, G05D 107/70, G05D 109/10

(54) **VEHICLE MANUFACTURING SYSTEM AND VEHICLE MANUFACTURING METHOD**

(30) Priority: 07.10.2024 JP 2024176107
(71) Applicant: TOYOTA JIDOSHA KABUSHIKI KAISHA, Toyota-shi, Aichi-ken 471-8571 (JP)
(72) Inventor: IWAZAKI, Noritsugu, Toyota-shi, 471-8571 (JP); KANOU, Takeshi, Toyota-shi, 471-8571 (JP); INOUE, Go, Toyota-shi, 471-8571 (JP); OKAMOTO, Yuki, Toyota-shi, 471-8571 (JP); OKA, Yuhei, Toyota-shi, 471-8571 (JP); KAKUMA, Daisuke, Toyota-shi, 471-8571 (JP); CHIBA, Hiroya, Toyota-shi, 471-8571 (JP); OHARA, Kento, Toyota-shi, 471-8571 (JP)
(74) Representative: J A Kemp LLP

(57) **Abstract**

A vehicle manufacturing system (50) according to this embodiment is a vehicle manufacturing system for performing control in such a way that a plurality of vehicles forming a platoon travel during a manufacturing process or a transporting process, the vehicle manufacturing system (50) including: a vibration sensor (150) that is provided in a vehicle (100) and detects vibration that the vehicle receives; a comparison unit (151) configured to compare a vibration pattern of the vibration detected by the vibration sensor (150) with a reference pattern set in advance; and a control unit configured to control traveling of the vehicle based on a result of the comparison.

## Description

### BACKGROUND

The present disclosure relates to a vehicle manufacturing system and a vehicle manufacturing method.

Patent Literature 1 discloses a vehicle manufacturing system. A vehicle travels, by autonomous control or remote control, in a system for producing vehicles.

[Patent Literature 1] Published Japanese Translation of PCT International Publication for Patent Application, No. 2017-538619

### SUMMARY

In a vehicle manufacturing factory, a plurality of vehicles run autonomously along a transport path and are sequentially manufactured. Therefore, productivity can be improved. On the other hand, it is also desirable to control vehicles from the outside. For example, in the case of an emergency, a worker may want to stop or slow down a vehicle. Operation devices such as switches and buttons are installed near the manufacturing line so that the worker can easily operate the devices in the above case. However, if the device is installed in the transport path, it interferes with traveling of the vehicle and the work of the worker. Therefore, there is a problem that the worker cannot stop the vehicle quickly.

An object of the present disclosure is to provide a vehicle manufacturing system and a vehicle manufacturing method that enable a worker to control a vehicle quickly.

A vehicle manufacturing system according to the present disclosure is a vehicle manufacturing system for performing control in such a way that a plurality of vehicles forming a platoon travel during a manufacturing process or a transporting process, the vehicle manufacturing system including: a sensor that is provided in the vehicle and detects vibration that the vehicle receives; a comparison unit configured to compare a vibration pattern of the vibration detected by the sensor with a reference pattern set in advance; and a vehicle control unit configured to control the vehicle based on a result of comparing the vibration pattern with the reference pattern.

A vehicle manufacturing method according to the present disclosure is a vehicle manufacturing method for performing control in such a way that a plurality of vehicles forming a platoon travel during a manufacturing process or a transporting process, the vehicle manufacturing method including: a step of detecting, by a vibration sensor provided in the vehicle, vibration that the vehicle receives; a step of comparing a vibration pattern of the vibration detected by the vibration sensor with a reference pattern set in advance; and a step of controlling traveling of the vehicle based on a result of comparing the vibration pattern with the reference pattern.

According to the present disclosure, it is possible to provide a vehicle manufacturing system and a vehicle manufacturing method that enable a worker to control a vehicle quickly.

The above and other objects, features and advantages of the present disclosure will become more fully understood from the detailed description given hereinbelow and the accompanying drawings.

### BRIEF DESCRIPTION OF DRAWINGS

Fig. 1 is a schematic diagram showing a whole configuration of a vehicle manufacturing system;
Fig. 2 is a schematic diagram showing a part of the vehicle manufacturing system;
Fig. 3 is a plan view schematically showing a part of a traveling path of the vehicle manufacturing system;
Fig. 4 is a side view schematically showing a part of the traveling path of the vehicle manufacturing system;
Fig. 5 is a block diagram showing a control system of the vehicle manufacturing system;
Fig. 6 is a flowchart showing a vehicle manufacturing method;
Fig. 7 is a diagram for describing travel control of a vehicle;
Fig. 8 is a control block diagram for describing a travel control example 1;
Fig. 9 is a flowchart for describing the travel control example 1;
Fig. 10 is a control block diagram for describing a travel control example 2; and
Fig. 11 is a flowchart for describing the travel control example 2.

### DESCRIPTION OF EMBODIMENTS

Embodiments of the present disclosure will now be described with reference to the drawings. However, the claimed disclosure is not limited to the following embodiments. Moreover, not all of the configurations described in the embodiments are essential as means for solving the problem. For the sake of clarity of the explanation, the following descriptions and drawings have been omitted and simplified as appropriate. In each drawing, the same elements have the same reference signs, and repeated descriptions have been omitted as appropriate.

### First Embodiment

### Vehicle Manufacturing System

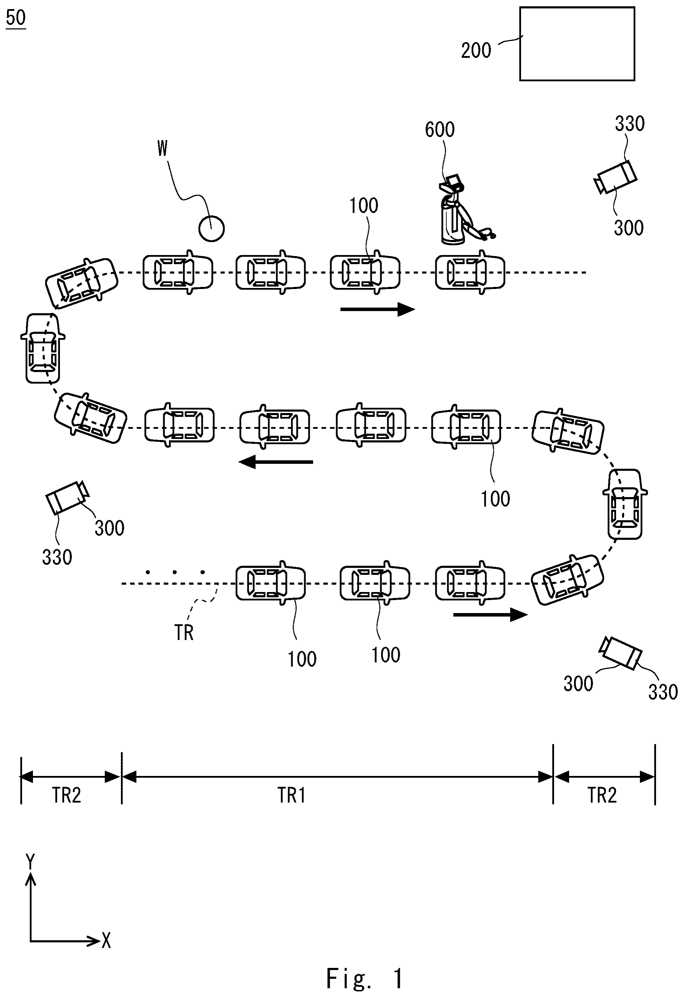

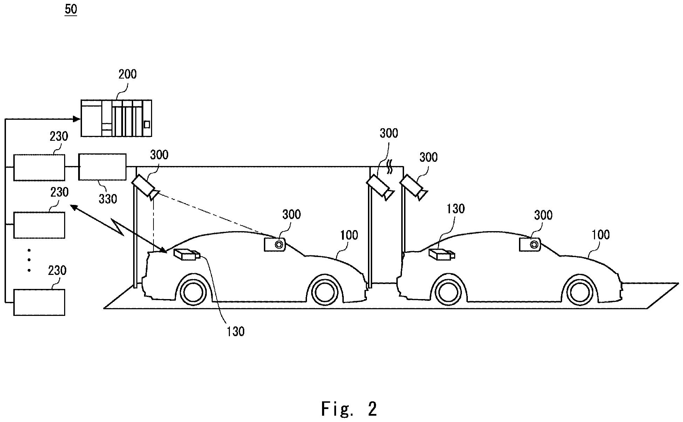

With reference to Figs. 1 and 2, a vehicle manufacturing system 50 according to this embodiment will be described. Fig. 1 is a schematic diagram showing a configuration of the vehicle manufacturing system 50. Fig. 2 is a diagram schematically showing two traveling vehicles 100. Fig. 1 shows an XY orthogonal coordinate system for the sake of clarity of the explanation.

The vehicle manufacturing system (this may also be referred to as the system) 50 is used in a vehicle manufacturing factory where vehicles 100 are manufactured. The vehicle manufacturing system 50 is also used in a transport location where a transporting process such as transportation to a yard or shipment is carried out. As shown in Fig. 1, the vehicle manufacturing system 50 includes a server 200, a sensor 300, and a robot 600. The plurality of vehicles 100 are self-driving vehicles that can travel by themselves during a manufacturing process. The vehicle manufacturing system 50 performs control in such a way that the plurality of vehicles 100 perform travel in a form of a platoon (i.e. a formation or an alignment).

The sensor 300 includes a communication apparatus 330 that transmits or receives data to or from the server 200. The server 200 includes a communication apparatus 230 that transmits or receives data to or from the sensor 300. Further, as shown in Fig. 2, the communication apparatus 230 has a function of transmitting or receiving data to or from the vehicle 100. Further, the vehicle 100 includes a communication apparatus 130 that receives data from the server 200. Each of the vehicles 100 includes the communication apparatus 130.

The communication apparatus 130, the communication apparatus 230, and the communication apparatus 330 may each be general-purpose equipment such as a network hub or a router apparatus. The communication apparatus 130, the communication apparatus 230, and the communication apparatus 330 each use, for example, general-purpose wireless communication such as WiFi (registered trademark). In each of the communication apparatus 130, the communication apparatus 230, and the communication apparatus 330, an address for specifying the communication partner is set. An address for communication is, for example, an Internet Protocol (IP) address.

Each of the vehicles 100 is a vehicle whose manufacturing has not yet been completed. As shown in Fig. 1, the vehicle 100 travels along a traveling path TR set in advance. The manufacturing of the vehicle 100 is gradually done as it travels along the traveling path TR. Specifically, while the vehicle 100 travels along the traveling path, workers W, a robot 600, or the like perform assembling of parts, switch operations, welding, inspection, and so on. The work in each manufacturing process is thus performed. The work in each manufacturing process is performed in a predetermined order, whereby the vehicle 100 is manufactured.

A plurality of vehicles 100 travel in a form of a platoon. Specifically, the vehicles 100 travel at a constant speed in such a way that distances between vehicles are constant at a predetermined distance. Further, the plurality of vehicles 100 travel at the same speed. Further, the traveling path TR includes a straight-ahead area TR1 where a vehicle 100 travels straight ahead and a turning area TR2 where the vehicle 100 makes a turn. In the straight-ahead area TR1, the traveling path TR has a linear shape.

The turning area TR2 is a place where the vehicle 100 changes its traveling direction. In the turning area TR2, the vehicle 100 makes a U-turn. In the turning area TR2, for example, the traveling path TR has an arcuate shape having a predetermined radius of curvature. In the turning area TR2, the traveling path TR is a semicircle. The turning area TR2 is provided in each end of the straight-ahead area TR1. For example, after traveling through the straight-ahead area TR1 in the +X direction, the vehicle 100 reaches the turning area TR2. After the vehicle 100 makes a turn by 180 degrees in the turning area TR2, the vehicle 100 travels through the straight-ahead area TR1 in the -X direction. On the other hand, after the vehicle 100 travels through the straight-ahead area TR1 in the -X direction, the vehicle 100 reaches the turning area TR2. After the vehicle 100 makes a turn by 180 degrees in the turning area TR2, the vehicle 100 travels through the straight-ahead area TR1 in the +X direction. In this manner, the manufacturing of the vehicle 100 is gradually done as it alternately passes through the straight-ahead area TR1 and the turning area TR2.

The sensor 300 is a camera that captures an image of the vehicle 100 which is moving or is stopped. The sensor 300 captures an image of one or a plurality of vehicles 100. The sensor 300 is provided to detect inter-vehicle distances. The server 200 is able to detect the position of the vehicle 100 in the factory based on the image captured by the sensor 300. The sensor 300 is installed, for example, on a wall surface, a support column, the ceiling or the like of the factory, and captures an image of the vehicle 100 from an oblique upward angle. The sensor 300 captures an image at an angle of view which includes two or more vehicles 100 that form a platoon. The sensor 300 may be installed at a height the same as that of the vehicles 100 and capture images of two or more vehicles 100 from a side direction thereof.

The communication apparatus 330 transmits the image captured by the sensor 300 to the server 200. The communication apparatus 330 may transmit, besides the captured image, information obtained from the captured image to the server 200. That is, the communication apparatus 330 transmits a result of detection detected in the sensor 300. Note that the communication apparatus 330 may be built in the sensor 300 or may be separated from the sensor 300. Further, the communication apparatus 330 may be shared among a plurality of sensors 300. That is, in a case where the plurality of sensors 300 are installed, one communication apparatus 330 may transmit data to the server 200.

As described above, after the sensor 300 captures an image of the vehicle 100, the communication apparatus 330 transmits the captured image and the like to the server 200. The communication apparatus 230 receives data of the captured image from the sensor 300. The server 200 performs predetermined image processing on the image captured by the sensor 300, whereby it is possible to specify inter-vehicle distances. For example, the server 200 calculates inter-vehicle distances of a plurality of vehicles 100 forming a platoon. The number of vehicles forming a platoon is not particularly limited and may be any number that is equal to or greater than three.

Further, the sensor 300 for detecting inter-vehicle distances is not limited to a camera. A sensor for detecting inter-vehicle distances may be various kinds of sensors such as an RGB camera, a far-infrared camera, or a LiDAR. The sensor 300 is not limited to an optical sensor, and may instead be a radar. As a matter of course, two or more sensors 300 may be installed, or two or more sensors 300 may be used in combination with each other. For example, the sensor 300 may include a LiDAR and a camera.

The communication apparatus 330 transmits a result of the detection to the server 200. As described above, the result of the detection transmitted from the sensor 300 may be a captured image or may be information extracted from the image. In a case where, for example, the sensor 300 has an image processing function, the sensor 300 transmits information extracted by image processing to the server 200.

Further, as shown in Fig. 2, the sensor 300 may be mounted on the vehicle 100. The sensor 300 is, for example, an in-vehicle camera, a LiDAR, a radar, or the like. In a case where the sensor 300 is an in-vehicle camera, the sensor 300 captures an image of a vehicle 100 in front (this vehicle may be referred to as a front vehicle). In a case where the sensor 300 is an in-vehicle LiDAR, the sensor 300 measures a distance from the vehicle 100 to the front vehicle 100. The communication apparatus 130 transmits the image and a result of the measurement to the server 200.

The server 200 controls a vehicle 100 in such a way that the vehicle 100 moves along the traveling path TR. Further, the server 200 controls a plurality of vehicles 100 in such a way that the vehicles 100 perform platoon traveling. For example, the vehicles 100 travel along the traveling path TR in one line. The server 200 transmits a control signal to each vehicle 100 by the communication apparatus 230.

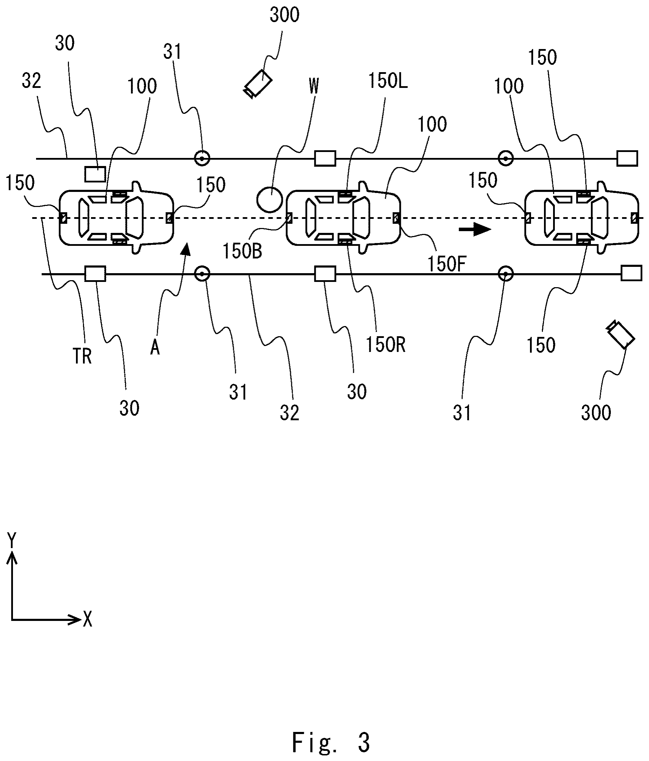

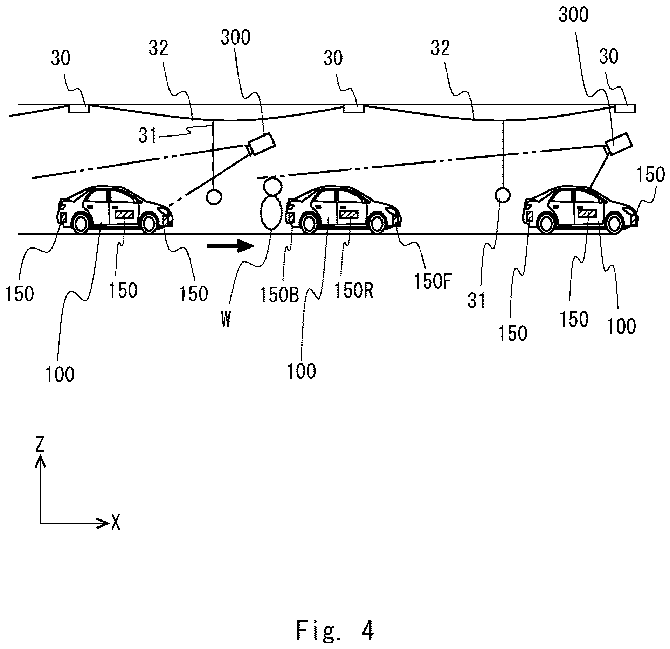

The detailed configuration of the traveling path TR and its peripheral equipment will be described with reference to Figs. 3 and 4. Fig. 3 is a plan view schematically showing a vehicle traveling along the traveling path TR and a worker W in its vicinity. Fig. 4 is a side view schematically showing a vehicle traveling along the traveling path TR and a worker W in its vicinity. Figs. 3 and 4 show three vehicles 100 autonomously traveling along the traveling path TR.

Here, the area where the vehicles 100 travel is referred to as a traveling area A. The traveling area A is an area including the traveling path TR. Here, since the traveling path TR is a straight line along the X direction in the XY plane view, the traveling area A is a belt-like area along the X direction. The traveling area A is a belt-like area having almost the same width as the vehicle width of the vehicle 100.

As shown in Figs. 3 and 4, each of the vehicles 100 is provided with a vibration sensor 150. The vibration sensor 150 detects vibration that the vehicle 100 receives. The vibration sensor 150 is, for example, a sensor for an air bag. In other words, the vibration sensor 150 is a satellite sensor for rear-end collision detection. When a large impact is applied to the vehicle 100 after the completion of the vehicle 100, the vibration sensor 150 detects the impact. Then, the vibration sensor 150 or the like outputs a signal for opening the air bag.

For example, the vibration sensor 150 is mounted on the front side, the rear side, the left side, and the right side of the vehicle 100. As shown by the central vehicle 100 in Figs. 3 and 4, the vibration sensors 150 provided on the front side, the rear side, the left side, and the right side of the vehicle 100 are vibration sensors 150F, 150B, 150L, and 150R, respectively. The vibration sensor 150F is installed on the front of the vehicle 100, and the vibration sensor 150B is installed on the rear of the vehicle 100. The vibration sensor 150L is installed on the left side of the vehicle 100, and the vibration sensor 150R is installed on the right side of the vehicle 100.

The vibration sensor 150 is installed on the left and right doors, front and rear bumpers, etc. The vibration sensor 150 may be a sensor other than an airbag sensor. The vibration sensor 150 may detect pressure and acceleration. The vibration sensor 150 outputs a detection signal corresponding to the detected vibration to the ECU, etc. The detection signal indicates the time change of the vibration. The number of vibration sensors 150 installed in one vehicle 100 may be one or more. Furthermore, the arrangement of the vibration sensors 150 is not limited to four positions, front, rear, left, and right.

A worker W is present around the vehicle 100. The worker W is working on the vehicle 100. While the vehicle 100 is traveling in the traveling area A, the worker W performs parts assembly, switch operation, welding, inspection, etc. Thus, the work of each manufacturing process is executed. Then, the work of each manufacturing process is executed in a predetermined order, and thereby the vehicle 100 is manufactured. Even at a position away from the vehicle 100, the worker W may walk. Or, the worker W who has parts may walk toward the vehicle 100.

Furthermore, a control equipment 30 is provided around the traveling area A. The control equipment 30 transmits a control signal for stopping the vehicle 100 to the server 200. The control equipment 30 is installed, for example, on the ceiling or wall of a factory building. The installation position of the control equipment 30 may be movable. Here, the control equipment 30 is installed on both sides of the traveling area A. In other words, the control equipment 30 is installed on both the +Y side and the -Y side of the traveling area A. Of course, the installation position and the number of the control equipment 30 are not particularly limited.

A string 31 is connected to the control equipment 30. The control equipment 30 and the string 31 are installed at a height that does not interfere with the worker W and the vehicle 100. In addition, a suspension string 32 is attached to the string 31. The suspension string 32 is suspended to a height that the worker W can reach. When the worker W pulls the suspension string 32, the control equipment 30 is turned on and a control signal is transmitted. This stops the vehicle 100.

When the worker W finds a problem, trouble, or the like, the worker W pulls the suspension string 32 so that the vehicle 100 can be brought to an emergency stop. The suspension string 32 functions as a stop switch to stop the vehicle 100. In other words, when the worker W pulls the suspension string 32 which is a stop switch, the control equipment 30 is turned on and a control signal is transmitted to the server 200. As a result, the vehicle 100 is stopped. The control equipment 30, the string 31, and the suspension string 32 function as emergency stop equipment.

Here, the suspension string 32 is arranged outside the traveling area A so as not to interfere with the vehicle 100. If the suspension string 32 operated by the worker W is installed in the traveling area A, it may come into contact with the traveling vehicle 100. There is a case where the worker W in the vicinity of the vehicle 100 wants to stop the vehicle 100 immediately. Therefore, the suspension string 32 is installed on both sides of the traveling area A. In other words, the suspension string 32 is arranged outside the traveling area A.

When the worker W in the travel area A stops the vehicle 100 at the suspension string 32, the worker W moves to the suspension string 32 and pulls the suspension string 32. Therefore, when the distance from the worker W to the suspension string 32 is far, it is difficult to quickly pull the suspension string 32. Therefore, in this embodiment, the vehicle 100 can be controlled based on the detection result of the vibration sensor 150.

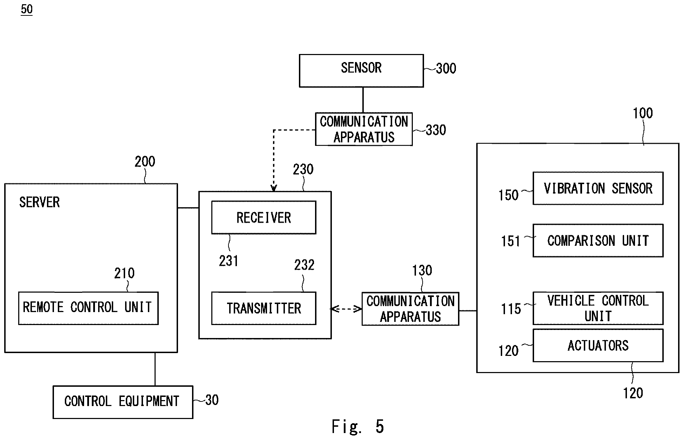

The control of the vehicle 100 during the manufacturing process or the transportation process will be described below with reference to Fig. 5. Fig. 5 is a block diagram showing the configuration of the control system of the vehicle manufacturing system 50. As shown in Fig. 5, the server 200 has a remote control unit 210. While one vehicle 100 and one sensor 300 are shown in Fig. 5, a plurality of vehicles 100 and sensors 300 are actually provided, as shown in Fig. 1

The vehicle 100 includes a vehicle control unit 115, actuators 120, a communication apparatus 130, a vibration sensor 150, and a comparison unit 151. While only one vibration sensor 150 is shown in the vehicle 100 in Fig. 5, the vehicle 100 may have a plurality of vibration sensors 150, as shown in Fig. 3 and Fig. 4.

The sensor 300 includes a communication apparatus 130. Note that the server 200 is not limited to a single physical apparatus, and a plurality of servers 200 may be disposed in a distributed manner. For example, the database may be a storage device or a cloud server provided separately from the processor.

The communication apparatus 230 includes a receiver 231 and a transmitter 232. The receiver 231 receives various signals, data and the like from the sensor 300 and the vehicle 100. For example, the receiver 231 receives data indicating the detection result of the sensor 300. The data received from the sensor 300 may be image data or data extracted from the image data.

The transmitter 232 transmits various signals, data and the like to the sensor 300 and the vehicle 100. For example, the transmitter 232 transmits control instruction values to the vehicle 100. Of course, the server 200 may transmit and receive data other than the above. As the communication between the receiver 231 and the transmitter 232, it is possible to use processing according to a general-purpose communication standard such as WiFi (registered trademark).

The communication apparatus 130 of the vehicle 100 is a wireless terminal for wireless communication with the server 200. An IP (Internet Protocol) address or the like is set in the communication apparatus 130. When the communication apparatus 130 of the vehicle 100 receives the control instruction values, the vehicle 100 moves according to the control instruction values. The actuators 120 include a wheel motor for driving the wheels, a steering motor for controlling the steering angle, and a brake for stopping the vehicle. The vehicle control unit 115 generates a control signal to control the actuators 120 in response to the control instruction. The vehicle control unit 115 may consist of an ECU (Electronic Control Unit). Thus, the vehicle 100 can move along the traveling path TR.

The sensor 300 is provided to detect the inter-vehicle distance. For example, the server 200 performs image processing on the image of the sensor 300 to determine the distance between the front and rear of the vehicle 100. The remote control unit 210 of the server 200 generates a control signal based on the vehicle distance. The control signal is a signal for controlling the speed of the vehicle, for example. The server 200 generates a control signal and transmits it to the vehicle 100 so that the inter-vehicle distance of each of the vehicles 100 is constant. As a result, the vehicle 100 travels at a desired speed.

The vibration sensor 150 detects vibration received by the vehicle 100. The vibration sensor 150 outputs a detection signal corresponding to the detected vibration to the comparison unit 151. The voltage of the detection signal changes with time. Here, the vibration indicated by the detection signal is defined as a vibration pattern. The vibration pattern may be the detection signal itself or a feature amount vector extracted from the detection signal.

The comparison unit 151 compares the vibration pattern indicated by the detection signal with the reference pattern. A reference pattern is set in the comparison unit 151 in advance. The comparison unit 151 outputs the comparison result to the vehicle control unit 115. The vehicle control unit 115 controls the vehicle 100 based on the comparison result between the vibration pattern and the reference pattern.

An example of travel control according to the vibration pattern will be described below. An example of control for stopping the vehicle 100 will be described below. If the vibration pattern matches the reference pattern, the comparison unit 151 outputs a match signal to the vehicle control unit 115. When the match signal is input, the vehicle control unit 115 stops the vehicle 100. For example, the vehicle control unit 115 operates the brakes of the actuators. As a result, the vehicle 100 quickly stops.

The vibration given to the vehicle 100 by the worker W in advance is measured, and the comparison unit 151 stores the measurement result as a reference pattern. The reference pattern indicates, for example, the vibration when the worker W hits the vehicle 100 twice consecutively. When the worker W detects an abnormality or the like, the vehicle 100 is hit twice consecutively. Then, the vibration pattern becomes similar to the reference pattern, and the comparison unit 151 determines that the vibration pattern matches the reference pattern. When it is determined that the vibration pattern matches the reference pattern, the vehicle control unit 115 stops the vehicle 100. Thus, when the abnormality or the like is detected, the vehicle 100 can be stopped promptly. When the worker W wants to control the vehicle 100, he/she continuously hits the same place of the vehicle 100. Thus, the vehicle 100 is stopped promptly.

The comparison unit 151 performs pattern matching processing between the vibration pattern and the reference pattern. The comparison unit 151 can use pattern matching processing of voice signals or the like. For example, the comparison unit 151 extracts a feature amount vector from the vibration pattern. Then, the comparison unit 151 calculates the distance between the feature amount vector of the vibration pattern and the feature amount vector of the reference pattern. The comparison unit 151 can determine whether the reference pattern and the vibration pattern match, for example, based on the distance between the feature amount vectors.

In addition, a plurality of reference patterns may be set in the comparison unit 151. In this case, control contents may be assigned to each of the plurality of reference patterns. The control contents may include one or more of emergency stop, temporary stop, deceleration, acceleration, and start. Here, it is assumed that a first reference pattern to a fifth reference pattern are set in the comparison unit 151. The first reference pattern to the fifth reference pattern are respectively distinguishable patterns. For example, the number of times and the strength of hitting the vehicle 100 may be different for each reference pattern.

For example, if the vibration pattern matches the first reference pattern, the vehicle stops in an emergency. If the vibration pattern matches the second reference pattern, the vehicle 100 temporarily stops. If the vibration pattern matches the third reference pattern, the vehicle 100 decelerates. If the vibration pattern matches the fourth reference pattern, the vehicle 100 accelerates. If the vibration pattern matches the fifth reference pattern, the vehicle 100 starts. In this way, a plurality of reference patterns may be set in the comparison unit 15 l, and the control contents may be changed according to the reference patterns. Thus, the worker W can appropriately control the vehicle 100 by simple operation.

It is preferable that the comparison unit 151 compares the vibration patterns detected by the plurality of vibration sensors 150 with the reference pattern. For example, a reference pattern indicating vibration may be set for each vibration sensor 150 in the comparison unit 151. Specifically, when four vibration sensors 150F, 150B, 150L, and 150R are provided in the vehicle 100, in the first reference pattern, four sub-patterns of front, rear, left, and right form one set. The sub-pattern differs for each reference pattern. The comparison unit 151 determines whether the vibration patterns of all the vibration sensors 150F, 150B, 150L, and 150R match the sub-pattern. For example, when all the vibration patterns match the reference pattern, the comparison unit 151 outputs a match signal. Thus, the determination accuracy can be improved.

Furthermore, by using the plurality of vibration sensors 150, the number of reference patterns can be increased. Therefore, the number of control contents can be increased. For example, the comparison unit 151 can estimate the position and direction in which vibration is applied to the vehicle 100 by comparing a plurality of vibration patterns. Specifically, when the worker W hits the front side of the vehicle 100, the vibration detected by the vibration sensor 150F is greater than the vibration detected by the other vibration sensors 150B, 150L, and 150R, and is detected at an earlier timing. When the worker W hits the front side of the vehicle 100, the vibration detected by the vibration sensor 150B is the smallest and is detected at a later timing.

Therefore, by mounting the vibration sensors 150 at different positions of the vehicle 100, the comparison unit 151 can specify the position and direction in which vibration is applied. According to at least one of the position and direction in which vibration is applied to the vehicle 100, the comparison unit 151 can determine whether the vibration pattern matches the reference pattern. Thus, the determination accuracy can be improved.

Specifically, assume that the vibration when the worker W hits the vehicle 100 from the right side twice is the first reference pattern. Assume that the vibration when the worker W hits the vehicle 100 from the left or right side once and then hits it from the front side once is the second reference pattern. In addition, the vibration when the worker W hits it three times from the front side is set as the third reference pattern. The vibration when the worker W hits it once from the front side and twice from the back side is set as the fourth reference pattern. The vibration when the worker W hits it twice from the left side and then twice from the right side is the fifth reference pattern. In this way, the number of reference patterns can be increased.

In addition, it is preferable to set the vibration that the worker W can easily give as the reference pattern for high-urgency control contents such as emergency stop. In this way, when abnormality occurs, the worker W can quickly stop the vehicle 100. For example, for emergency stop, the vibration pattern in which the same place is hit is set as the reference pattern. On the other hand, urgency is not required for control contents such as acceleration and start. Furthermore, if the vehicle 100 accelerates and starts unintentionally, the vehicle 100 may come into contact with the worker W. Therefore, the difficulty of providing vibration may be changed according to the urgency of control contents or the like. For example, for acceleration and start, a reference pattern may be a vibration pattern obtained by hitting the vehicle 100 multiple times at different locations.

A machine learning model may be used for comparison processing by the comparison unit 151. By inputting the vibration pattern into a model utilizing artificial intelligence, the comparison unit 151 can execute the comparison processing. As the machine learning model, for example, a deep learning model having a plurality of intermediate layers can be used. As the machine learning model, for example, a neural network learned by supervised learning using a learning data set can be used. The learning data set has, for example, a detection signal with a ground-truth label. When neural network learning is performed, it is preferable that the parameters of the network are updated to reduce the error between the output result of the model and the ground-truth label by a back-propagation method.

Here, the machine learning model may be a classification model with the detection signals of the plurality of vibration sensors 150 as inputs. For example, the vibration patterns indicated by the four detection signals of the vibration sensors 150F, 150B, 150L, and 150R are input data of the classification model. The classification model outputs a classification result indicating whether the vibration pattern matches the reference pattern. Furthermore, it outputs a classification result indicating which reference pattern the vibration pattern matches. The machine learning model can be a classification model such as k-neighborhood method or decision tree.

For example, when training data of the machine learning model is prepared, a ground-truth label is attached to the detection signal when the worker W gives the vibration indicated by the first reference pattern to the fifth reference pattern. Alternatively, a ground-truth label is attached to the detection signal when a vibration other than the vibration indicated by the reference pattern is given. A classification model is constructed by performing supervised machine learning using training data with ground-truth labels. For example, the classification model outputs the match probability with each reference pattern. Then, when the highest match probability exceeds the threshold, the classification model determines that it matches the reference pattern corresponding to the match probability. If the highest match probability is less than or equal to the threshold, the classification model determines that it does not match any reference pattern. Thus, the classification accuracy can be improved. Therefore, the vehicle 100 can be appropriately controlled.

Alternatively, the machine learning model may be a model that receives one vibration sensor 150 as input. In this case, the machine learning model determines whether the vibration pattern and the reference pattern match for each vibration sensor 150. If the vibration pattern of each vibration sensor 150 matches the sub-pattern of the reference pattern, the machine learning model determines that they match each other. Alternatively, the machine learning model may output match probabilities for each sub-pattern. In this case, the comparison unit 151 determines whether or not the reference pattern matches the vibration pattern based on the four match probabilities.

In this way, the worker W can control the vehicle 100 by giving a predetermined vibration to the vehicle 100. Therefore, the worker W can quickly stop the vehicle 100. In other words, the worker W in the travel area A can stop the vehicle 100 without moving to the suspension string 32. When the worker W finds an abnormality or the like, the worker W can quickly stop the vehicle 100 by giving a vibration to the vehicle 100.

When the worker W pulls the suspension string 32 (see Figs. 3 and 4), the control equipment 30 transmits a signal to stop the vehicle 100 to the server 200. In the same manner as described above, the server 200 transmits a stop signal for stopping the vehicle 100 to the vehicle 100. Thus, the worker W in the nondetection area DA2 can stop the vehicle 100 quickly. Alternatively, the control equipment 30 may directly transmit a stop signal to the vehicle 100.

Furthermore, the reference pattern may be different for each working process. For example, suppose that a plurality of working processes are sequentially executed for the moving vehicle. In this case, the reference pattern may be set according to the working process. For example, suppose that the worker W performs different works according to the working process. In this case, it is preferable to set the reference pattern so that the vibration given to the vehicle 100 by work does not match the reference pattern. In this way, the determination accuracy can be improved. In other words, it is possible to prevent the comparison unit 151 from erroneously determining that the vibration pattern of the vibration given by work matches the reference pattern. Therefore, it is possible to prevent the vehicle 100 from being controlled incorrectly.

The working process of attaching a component to the rear side of the vehicle 100 will be described below as an example. In this case, the worker W attaches a component to the vehicle 100 using a tool such as a screwdriver. By this attaching operation, vibration is applied to the vehicle 100 from the rear side. Therefore, the reference pattern is preferably a pattern when vibration is applied to the vehicle 100 from a direction other than the rear side. For example, the vibration when the vehicle 100 is hit from the side or front side is used as the reference pattern. Thus, by setting an appropriate reference pattern for each working process in the comparison unit 151, erroneous determination can be prevented.

For example, in the reference pattern, it is preferable that the direction and position where vibration is applied are different from the position and direction where vibration is applied in the working process. Or, in the working process, the vibration given from the position where the worker is supposed to be located and its surroundings is defined as the reference pattern.

As described above, the order of the working processes is defined in the manufacturing process. In this case, the location where each working process is executed is defined in the factory. In other words, the XY coordinate in the factory is associated with the working process. Therefore, the reference pattern can be set according to the position coordinates where the vehicle 100 is traveling. Alternatively, when the vibration sensor 150 detects the vibration given by the working process, the setting pattern corresponding to the vibration of work may be selected. In this case, it is preferable to measure the vibration pattern given by work in advance.

In the comparison unit 151, the reference pattern may be set for each working process in advance. Then, the comparison unit 151 selects an appropriate reference pattern according to the working process. As a result, the determination accuracy can be improved, and the worker W can control the vehicle 100 more appropriately.

Based on the comparison result, the vehicle 100 to be controlled is not limited to the vehicle 100 to which the vibration matching the reference pattern is given. For example, the vehicle 100 to which the vibration matching the reference pattern is given and the surrounding vehicle 100 may be controlled. For example, if the vehicle 100 to which the vibration is given stops, the system 50 may control the subsequent vehicle 100.

Specifically, when the comparison unit 151 outputs a match signal to the vehicle control unit 115, the vehicle control unit 115 generates a travel control signal to stop the vehicle 100. The communication apparatus 130 sends a travel control signal including the vehicle ID or the like of the vehicle to the server 200. When the receiver 231 receives the travel control signal from the vehicle 100, the remote control unit 210 determines the vehicle 100 to be controlled based on the travel control signal. The remote control unit 210 generates a remote control signal including the vehicle ID of the determined vehicle 100. The transmitter 232 transmits a remote control signal to the vehicle 100. Thus, a plurality of the vehicles 100 can be controlled.

For example, if only the vehicle 100 to which vibration is given temporarily stops, the inter-vehicle distance with the next vehicle 100 becomes gradually narrow. Therefore, it is preferable that the vehicle 100 to be temporarily stopped and the subsequent vehicles 100 also temporarily stop. In addition, if the vehicle 100 to which vibration is given stops in an emergency, a problem may have occurred in the vehicle 100. Therefore, it is preferable that the vehicle control unit 115 also stops in an emergency for the vehicle 100 before or after the vehicle 100. In this way, the number and range of the vehicles 100 to be controlled may be set according to the control contents. In this way, based on the vibration given to one vehicle 100, a plurality of the vehicles 100 in its vicinity can be controlled.

When a plurality of vehicles 100 are controlled, the travel control signal and the remote control signal may include information indicating the vehicle 100 to be controlled. For example, the travel control signal may include the ID or the like of the vehicle 100 to be controlled. In this case, the vehicle control unit 115 and the communication apparatus 130 generate the travel control signal including the ID or the like of the vehicle to be controlled. The vehicle 100 to be controlled may be determined by the position of the vehicle 100 and the working process.

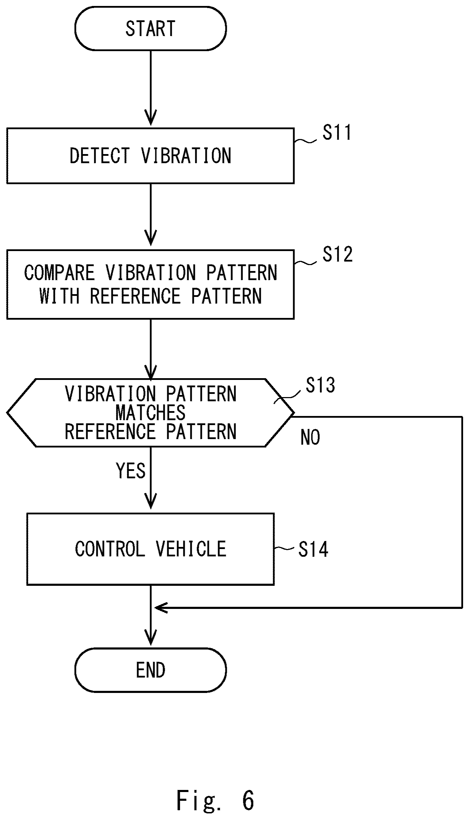

A vehicle manufacturing method will be described with reference to Fig. 6. Fig. 6 is a flowchart showing the vehicle manufacturing method according to this embodiment.

First, the vibration sensor 150 detects the vibration given to the vehicle 100 (S11). The comparison unit 151 compares the vibration pattern detected by the vibration sensor 150 with the reference pattern (S12). If the vibration pattern does not match the reference pattern (NO in S13), the process ends.

If the vibration pattern matches the reference pattern (YES in S13), the vehicle control unit 115 controls the vehicle (S14). As a result, the actuators 120 operate and the vehicle 100 stops. The vehicle 100 can be quickly controlled.

Then, the above processing is executed for each vehicle 100. Further, the vehicle 100 repeats the above processing.

Hereinafter, travel control examples for controlling traveling of the vehicle 100 in a system will be explained.

### <A. Travel Control Example 1>

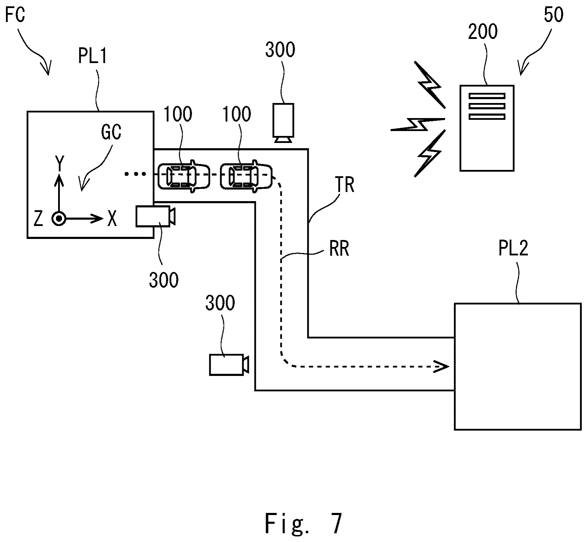

Fig. 7 is a conceptual diagram showing a configuration of a system 50 according to a travel control example 1. The system 50 includes a plurality of vehicles 100, each of which corresponds to a mobile body, a server 200, and one or more sensors 300.

Note that, when the mobile body is other than a vehicle, the terms "vehicle" and "car" in the present disclosure can be replaced by a "mobile body" as appropriate, and the term "travel" can be replaced by "move" as appropriate.

The vehicle 100 is configured to be able to travel by unmanned driving. The "unmanned driving" means driving not dependent on a driver's traveling operation. The traveling operation means an operation regarding at least one of "run", "turn", or "stop" of the vehicle 100. The unmanned driving is achieved by automatic or manual remote control that uses an apparatus located in the outside of the vehicle 100, or by autonomous control of the vehicle 100. Any passenger who does not perform the traveling operation may get on the vehicle 100 traveled by unmanned driving. The passenger who does not perform the traveling operation includes, for example, a person who is just sitting on a seat of the vehicle 100, and a person who is performing work such as an operation of assembling, an operation of inspection, or an operation of switches, which is an operation other than the traveling operation, while getting in the vehicle 100. Note that the driving by the traveling operation of the driver may be referred to as "manned driving".

The "remote control" here includes "complete remote control" in which all the operations of the vehicle 100 are completely determined from the outside of the vehicle 100 and "partial remote control" in which a part of the operations of the vehicle 100 is determined from the outside of the vehicle 100. Further, "autonomous control" includes "complete autonomous control" in which the vehicle 100 autonomously controls its own operation without receiving any piece of information from an external apparatus outside the vehicle 100 and "partial autonomous control" in which the vehicle 100 autonomously controls its own operation using information received from the external apparatus outside the vehicle 100.

In this embodiment, the system 50 is used in a factory FC which manufactures the vehicles 100. The reference coordinate system of the factory FC is a global coordinate system GC. That is, a desired position in the factory FC is expressed by coordinates of X, Y, and Z in the global coordinate system GC. The factory FC includes a first place PL1 and a second place PL2. The first place PL1 and the second place PL2 are connected to each other by a traveling path TR along which the vehicle 100 can travel. A plurality of sensors 300 are installed along the traveling path TR in the factory FC. The positions of the respective sensors 300 in the factory FC are adjusted in advance. The vehicle 100 moves from the first place PL1 to the second place PL2 along the traveling path TR by unmanned driving.

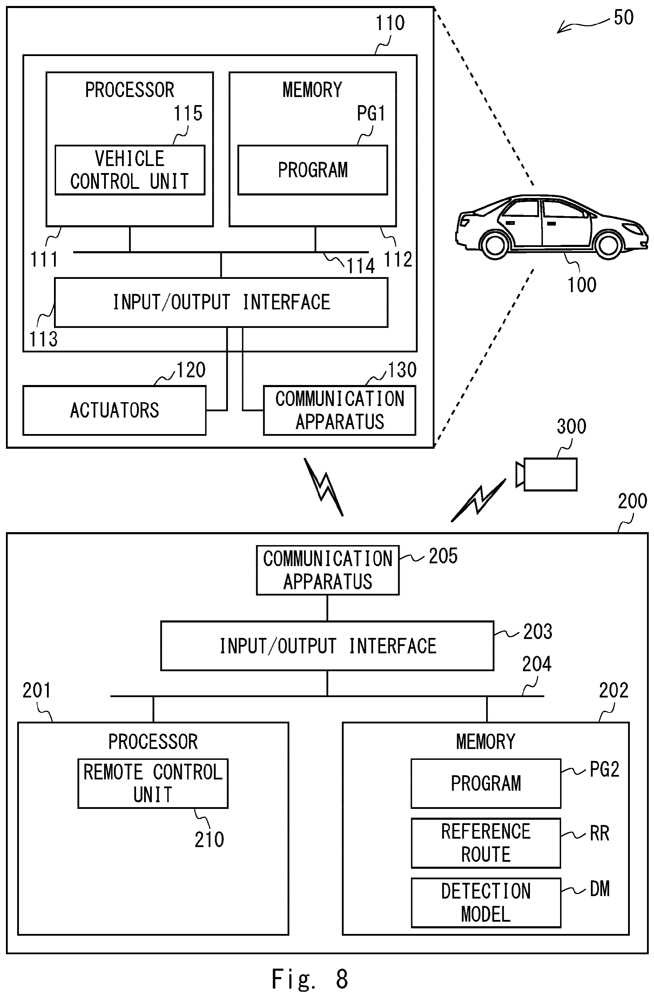

Fig. 8 is a block diagram showing a configuration of the system 50. The vehicle 100 includes a vehicle control apparatus 110 for controlling each part of the vehicle 100, actuators 120 including one or more actuators that drive under a control of the vehicle control apparatus 110, and a communication apparatus 130 for communicating with an external apparatus such as the server 200 by wireless communication. The actuators 120 include an actuator of a drive apparatus for accelerating the vehicle 100, an actuator of a steering apparatus for changing a traveling direction of the vehicle 100, and an actuator of a control apparatus for decelerating the vehicle 100.

The vehicle control apparatus 110 is composed of a computer including a processor 111, a memory 112, an input/output interface 113, and an internal bus 114. The processor 111, the memory 112, and the input/output interface 113 are connected to one another via the internal bus 114 in such a way that they can communicate with one another. The actuators 120 and the communication apparatus 130 are connected to the input/output interface 113. The processor 111 executes a program PG1 stored in the memory 112, thereby implementing various functions including a function as a vehicle control unit 115.

The vehicle control unit 115 causes the vehicle 100 to travel by controlling the actuators 120. The vehicle control unit 115 is able to cause the vehicle 100 to travel by controlling the actuators 120 using a travel control signal received from the server 200. The travel control signal is a control signal for traveling the vehicle 100. In this embodiment, the travel control signal includes an acceleration and a steering angle of the vehicle 100 as parameters. In another embodiment, the travel control signal may include, in place of or in addition to the acceleration of the vehicle 100, a speed of the vehicle 100 as a parameter.

The server 200 is composed of a computer including a processor 201, a memory 202, an input/output interface 203, and an internal bus 204. The processor 201, the memory 202, and the input/output interface 203 are connected to one another via the internal bus 204 in such a way that they can communicate with one another. A communication apparatus 205 for communicating with various kinds of apparatuses provided outside the server 200 is connected to the input/output interface 203. The communication apparatus 205 can communicate with the vehicle 100 by wireless communication and can communicate with each of the sensors 300 by wired communication or wireless communication. The processor 201 executes a program PG2 stored in the memory 202, thereby implementing various functions including the function as a remote control unit 210.

The remote control unit 210 acquires a result of detection by the sensors, generates a travel control signal for controlling the actuators 120 of the vehicle 100 using the result of the detection, and transmits the travel control signal to the vehicle 100, thereby causing the vehicle 100 to travel by remote control. The remote control unit 210 may generate not only the travel control signal but also, for example, control signals for controlling actuators for operating various kinds of auxiliary equipment provided in the vehicle 100 or various kinds of equipment such as a windshield wiper, power windows, or lamps. That is, the remote control unit 210 may operate these various kinds of equipment or various kinds of auxiliary equipment by remote control.

The sensor 300 is a sensor that is provided outside the vehicle 100. The sensor 300 according to this embodiment is a sensor that captures the vehicle 100 from the outside of the vehicle 100. The sensor 300 includes a communication apparatus (not shown) and can communicate with other apparatuses such as the server 200 and so on by wired communication or wireless communication.

Specifically, the sensor 300 is composed of a camera. The camera as the sensor 300 captures an image including the vehicle 100, and outputs the captured image as a result of detection.

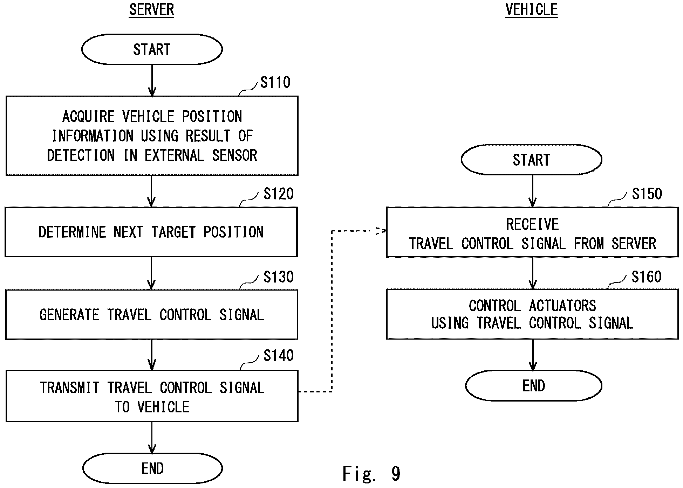

Fig. 9 is a flowchart showing a processing procedure of travel control of the vehicle 100 according to the travel control example. In the processing procedure shown in Fig. 9, the processor 201 of the server 200 functions as the remote control unit 210 by executing the program PG2. Further, the processor 111 of the vehicle 100 functions as the vehicle control unit 115 by executing the program PG1.

In Step S110, the processor 201 of the server 200 acquires vehicle position information of the vehicle 100 using the result of the detection output from the sensor 300. The vehicle position information is position information that forms a basis for generating a travel control signal. In this embodiment, the vehicle position information includes the position and the orientation of the vehicle 100 in a global coordinate system GC of the factory FC. Specifically, in Step S110, the processor 201 acquires the vehicle position information using the captured image acquired from the camera, which is the sensor 300.

Specifically, in Step S110, the processor 201 detects, for example, the outline of the vehicle 100 from the captured image, calculates the coordinate system of the captured image, that is, coordinates of measurement points of the vehicle 100 in the local coordinate system, and converts the calculated coordinates into coordinates in a global coordinate system GC, thereby acquiring the position of the vehicle 100. The outline of the vehicle 100 included in the captured image can be detected, for example, by inputting the captured image to the detection model DM that uses artificial intelligence. The detection model DM is prepared, for example, in the system 50 or in the outside of the system 50 and is stored in the memory 202 of the server 200 in advance. The detection model DM may be, for example, a learned machine learning model learned so as to implement one of semantic segmentation or instance segmentation. This machine learning model may be, for example, convolutional neural network (hereinafter, CNN) learned by supervised learning using a learning dataset. The learning dataset includes, for example, a plurality of training images including the vehicle 100, and a label indicating whether each area in the training image is an area indicating the vehicle 100 or an area indicating a part other than the vehicle 100. When CNN learning is performed, parameters of the CNN are preferably updated in such a way that the error between the result of the output by the detection model DM and the label is reduced by a back propagation method. Further, the processor 201 is able to acquire the orientation of the vehicle 100 by estimating it based on the direction of the moving vector of the vehicle 100 calculated from changes in positions of feature points of the vehicle 100 between frames of the captured image using an optical flow method.

In Step S120, the processor 201 of the server 200 determines the target position that the vehicle 100 should go next. In this embodiment, the target position is expressed by coordinates of X, Y, and Z in a global coordinate system GC. The memory 202 of the server 200 stores a reference route RR, which is a route along which the vehicle 100 should travel, in advance. The route is expressed by a node indicating the departure place, nodes indicating passage points, a node that indicates the target position, and a link connecting the respective nodes. The processor 201 determines the target position that the vehicle 100 should go next using the vehicle position information and the reference route RR. The processor 201 determines the target position on the reference route RR which is ahead of the current position of the vehicle 100.

In Step S130, the processor 201 of the server 200 generates a travel control signal for traveling the vehicle 100 toward the determined target position. The processor 201 calculates the traveling speed of the vehicle 100 from the transition of the position of the vehicle 100 and compares the calculated traveling speed with the target speed. In general, when the traveling speed is lower than the target speed, the processor 201 determines the acceleration in such a way that the vehicle 100 accelerates. On the other hand, when the traveling speed is higher than the target speed, the processor 201 determines the acceleration in such a way that the vehicle 100 decelerates. Further, when the vehicle 100 is positioned on the reference route RR, the processor 201 determines the steering angle and the acceleration to prevent the vehicle 100 from being deviated from the reference route RR. On the other hand, when the vehicle 100 is not positioned on the reference route RR, that is, when the vehicle 100 is deviated from the reference route RR, the processor 201 determines the steering angle and the acceleration in such a way that the vehicle 100 returns onto the reference route RR.

In Step S140, the processor 201 of the server 200 transmits a generated travel control signal to the vehicle 100. The processor 201 repeats, in a predetermined cycle, acquisition of the position of the vehicle 100, determination of the target position, generation of the travel control signal, transmission of the travel control signal, and the like.

In Step S150, the processor 111 of the vehicle 100 receives the travel control signal transmitted from the server 200. In Step S160, the processor 111 of the vehicle 100 controls the actuators 120 using the received travel control signal, thereby causing the vehicle 100 to travel at an acceleration and a steering angle indicated in the travel control signal. The processor 111 repeats reception of the travel control signal, and control of the actuators 120 in a predetermined cycle. With the system 50 in this example, it is possible to cause the vehicle 100 to travel by remote control and to move the vehicle 100 without using transport equipment such as cranes or conveyors.

### <B: Travel Control Example 2>

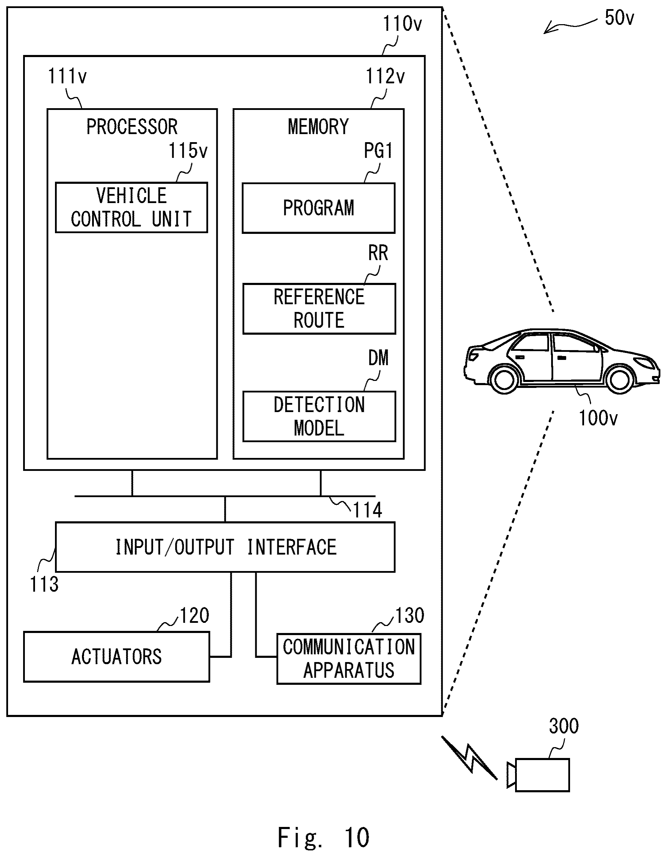

Fig. 10 is an explanatory diagram showing a schematic configuration of a system 50v according to a travel control example 2. In this example, the system 50v is different from that in the travel control example 1 in that the system 50v does not include the server 200. Further, a vehicle 100v in this configuration can travel by autonomous control of the vehicle 100v. The other configurations are the same as those stated above unless otherwise specified.

In this example, a processor 111v of a vehicle control apparatus 110v functions as a vehicle control unit 115v by executing a program PG1 stored in a memory 112v. The vehicle control unit 115v acquires a result of output by a sensor, generates a travel control signal using the result of the output, and outputs the generated travel control signal to operate the actuators 120, thereby enabling the vehicle 100v to travel by autonomous control. In this example, the memory 112v stores, besides the program PG1, a detection model DM and a reference route RR in advance.

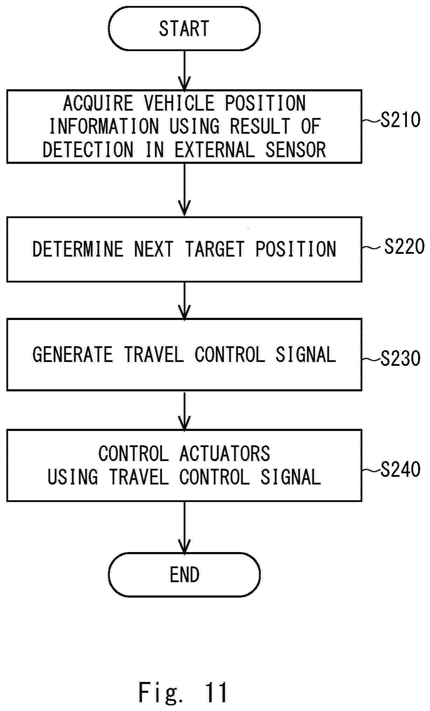

Fig. 11 is a flowchart showing a processing procedure of a travel control of the vehicle 100v in Travel control Example 2. In the processing procedure shown in Fig. 11, the processor 111v of the vehicle 100v functions as the vehicle control unit 115v by executing the program PG1.

In Step S210, the processor 111v of the vehicle control apparatus 110v acquires vehicle position information using a result of detection output from a camera, which is the sensor 300. In Step S220, the processor 111v determines the target position that the vehicle 100v should go next. In Step S230, the processor 111v generates a travel control signal for causing the vehicle 100v to travel toward the determined target position. In Step S240, the processor 111v controls the actuators 120 using the generated travel control signal, thereby causing the vehicle 100v to travel according to a parameter indicated in the travel control signal. The processor 111v repeats acquisition of the vehicle position information, determination of the target position, generation of the travel control signal, and control of the actuators in a predetermined cycle. With the system 50v in this example, it is possible to cause the vehicle 100v to travel by autonomous control of the vehicle 100v without remotely controlling the vehicle 100v by the server 200.

### YY: Other Travel Control Examples

(YY1) In the above examples, the sensor 300 is a camera. On the other hand, the sensor 300 may not be a camera, and may instead be, for example, Light Detection And Ranging (LiDAR). In this case, the result of the detection output from the sensor 300 may be three dimensional point cloud data indicating the vehicle 100. In this case, the server 200 and the vehicle 100 may acquire the vehicle position information by template matching that uses three dimensional point cloud data indicating the result of the detection and reference point cloud data that is prepared in advance.

(YY2) In the travel control example 1, the server 200 executes processing from the acquisition of the vehicle position information to the generation of the travel control signal. On the other hand, the vehicle 100 may perform at least a part of the processing from the acquisition of the vehicle position information to the generation of the travel control signal. For example, the following forms from (1) to (3) may be employed.
(1) The server 200 may acquire vehicle position information, determine the target position that the vehicle 100 should go next, and generate a route from the current position of the vehicle 100 indicated in the acquired vehicle position information to the target position. The server 200 may generate a route to a target position which is between the current position and the target position or may generate a route to the target position. The server 200 may transmit the generated route to the vehicle 100. The vehicle 100 may generate the travel control signal in such a way that the vehicle 100 travels along the route received from the server 200 and control the actuators 120 using the generated travel control signal.
(2) The server 200 may acquire vehicle position information and transmit the acquired vehicle position information to the vehicle 100. The vehicle 100 may determine the target position that the vehicle 100 should go next, generate a route from the current position of the vehicle 100 indicated in the received vehicle position information to the target position, generate a travel control signal in such a way that the vehicle 100 travels along the generated route, and control the actuators 120 using the generated travel control signal.
(3) In the forms of the above (1) and (2), an internal sensor may be mounted on the vehicle 100, and a result of detection output from the internal sensor may be used in at least one of the generation of the route or the generation of the travel control signal. The internal sensor is a sensor mounted on the vehicle 100. The internal sensor may include, for example, a sensor that detects a motion state of the vehicle 100, a sensor that detects an operation state of each part of the vehicle 100, and a sensor that detects an environment near the vehicle 100. Specifically, the internal sensor may include, for example, a camera, LiDAR, a millimeter wave radar, an ultrasonic sensor, a GPS sensor, an acceleration sensor, a gyro sensor or the like. For example, in the form of the above (1), the server 200 may acquire the result of the detection in the internal sensor and reflect the result of the detection in the internal sensor in the route when the route is generated. In the form of the above (1), the vehicle 100 may acquire the result of the detection in the internal sensor and reflect the result of the detection in the internal sensor in a travel control signal when the travel control signal is generated. In the form of the above (2), the vehicle 100 may acquire the result of the detection in the internal sensor, and reflect the result of the detection in the internal sensor in the route when the route is generated. In the form of the above (2), the vehicle 100 may acquire the result of the detection in the internal sensor, and reflect the result of the detection in the internal sensor in the travel control signal when the travel control signal is generated.

(YY3) In the travel control example 2, an internal sensor may be mounted on the vehicle 100v and the result of the detection output from the internal sensor may be used in at least one of the generation of the route or the generation of the travel control signal. For example, the vehicle 100v may acquire the result of the detection in the internal sensor, and reflect the result of the detection in the internal sensor in the route when the route is generated. The vehicle 100v may acquire the result of the detection in the internal sensor and reflect the result of the detection in the internal sensor in the travel control signal when the travel control signal is generated.

(YY4) In the travel control example 2, the vehicle 100v acquires the vehicle position information using the result of the detection by the sensor 300. On the other hand, an internal sensor is mounted on the vehicle 100v, and the vehicle 100v may acquire vehicle position information using a result of detection in the internal sensor, determine the target position that the vehicle 100v should go next, generate a route from the current position of the vehicle 100v indicated in the acquired vehicle position information to the target position, generate a travel control signal for traveling along the generated route, and control the actuators 120 using the generated travel control signal. In this case, the vehicle 100v may travel without using the result of the detection by the sensor 300. Note that the vehicle 100v may acquire a target arrival time or congestion information from the outside of the vehicle 100v and reflect the target arrival time or the congestion information in at least one of the route or the travel control signal. Further, all the functional configurations of the system 50v may be provided in the vehicle 100v. That is, the processing implemented by the system 50v in the present disclosure may be achieved by the vehicle 100v alone. For example, a leading vehicle 100v may transmit control instruction values to the following vehicle 100.

(YY5) In the travel control example 1, the server 200 automatically generates a travel control signal to be transmitted to the vehicle 100. On the other hand, the server 200 may generate the travel control signal to be transmitted to the vehicle 100 in accordance with an operation performed by an external operator located in the outside of the vehicle 100. For example, the external operator may operate a manipulation apparatus including a display for displaying a captured image output from the sensor 300, a steering, an accelerator pedal, and a brake pedal for remotely operating the vehicle 100, and a communication apparatus for communicating with the server 200 by wired communication or wireless communication, and the server 200 may generate a travel control signal in accordance with the operation added to the manipulation apparatus.

(YY6) In each of the above travel control examples, it is sufficient that the vehicle 100 include a configuration capable of moving by unmanned driving, and the vehicle 100 may have, for example, a form of a platform including the configurations stated below. Specifically, it is sufficient that the vehicle 100 at least include the vehicle control apparatus 110 and the actuators 120 in order to exert three functions of "run", "turn", and "stop" by unmanned driving. In a case where the vehicle 100 externally acquires information for unmanned driving, the vehicle 100 may further include a communication apparatus 130. That is, the vehicle 100 that can move by unmanned driving may not be provided with at least some of internal components such as a driving seat or a dashboard, at least some of the external components such as a bumper or a fender, or a body shell. In this case, before the vehicle 100 is shipped from the factory FC, the other components such as a body shell may be mounted on the vehicle 100, or the other components such as the body shell may be mounted on the vehicle 100 after the vehicle 100 is shipped from the factory FC in a state in which the other components such as the body shell are not mounted on the vehicle 100. Each of the components may be mounted thereon from a desired direction such as an upper side, a lower side, a front side, a rear side, a right side, or a left side of the vehicle 100, mounted thereon from the same direction, or mounted thereon from different directions. In terms of the form of the platform, the position may be determined as in the vehicle 100 according to the first embodiment.

(YY7) The vehicle 100 may be manufactured by combining a plurality of modules. The module means a unit formed of a plurality of components grouped according to a part or a function of the vehicle 100. For example, the platform of the vehicle 100 may be manufactured by combining a front module that forms a front part of the platform, a central module that forms a central part of the platform, and a rear module that forms a rear part of the platform with one another. Note that the number of modules that form the platform is not limited to three, and may be two or smaller or four or larger. Further, in addition to or in place of the components that form the platform, components of the vehicle 100 that form parts other than the platform may be formed in modules. Further, these modules may include any exterior components such as a bumper or a grill or any interior components such as seats and a console. Further, not only the vehicle 100 but also any form of mobile body may be manufactured by combining a plurality of modules. These modules may be manufactured, for example, by joining a plurality of components by welding, fixtures, or the like, or may be manufactured by integrally molding at least some of the components that form the module as one component by casting. A molding method of integrally forming one component, in particular, a relatively large-sized component is also called gigacasting or megacasting. For example, the above front module, central module, and rear module may be manufactured using gigacasting.

(YY8) Transporting a vehicle 100 using traveling of the vehicle 100 by unmanned driving is also referred to as "self-propelled transportation". Further, a configuration for achieving self-propelled transportation is referred to as a "vehicle remote control autonomous travel transportation system". Further, a production method for producing vehicles 100 using self-propelled transportation is also referred to as "self-propelled production". In the self-propelled production, for example, in a factory FC that manufactures the vehicles 100, a part of the transportation of the vehicle 100 is achieved by self-propelled transportation.

(YY9) In each of the above travel control examples, some or all of the functions and processing implemented in the form of software may be implemented in the form of hardware. Further, some or all of the functions and processing implemented in the form of hardware may be implemented in the form of software. For example, various types of circuits such as an integrated circuit or a discrete circuit may be used as hardware for implementing various types of functions in each of the above embodiments.

In the above travel control examples 1 and 2 described above as well, the travel control shown in Figs. 3-6, etc. can be applied. For example, the vehicle control unit 115 and the like shown in Figs. 8 and 11 performs travel control based on vibration. In Figs. 9-11 as well, travel control by the suspension string 32 and the control equipment 30 shown in Figs. 3 and 4 may be applied.

Further, some or all of the processing in the sensor 300, the vehicle 100, the server 200, the sensor 300, the robot 600 and the like can be implemented as a computer program. The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A vehicle manufacturing system for performing control in such a way that a plurality of vehicles (100) forming a platoon travel during a manufacturing process or a transporting process, the vehicle manufacturing system comprising:
a sensor (150) that is provided in the vehicle and detects vibration that the vehicle receives;
a comparison unit (151) configured to compare a vibration pattern of the vibration detected by the sensor with a reference pattern set in advance; and
a vehicle control unit (115) configured to control the vehicle based on a result of comparing the vibration pattern with the reference pattern.

2. The vehicle manufacturing system according to claim 1, wherein
a plurality of working processes are sequentially performed on the vehicle, and
the reference pattern is set in accordance with the working process.

3. The vehicle manufacturing system according to claim 1, wherein it is determined whether or not the vibration pattern matches the reference pattern in accordance with at least one of a position and a direction in which the vibration is applied to the vehicle (100).

4. The vehicle manufacturing system according to any one of claims 1 to 3, wherein the sensor (150) is a sensor for an airbag of the vehicle.

5. A vehicle manufacturing method for performing control in such a way that a plurality of vehicles (100) forming a platoon travel during a manufacturing process or a transporting process, the vehicle manufacturing method comprising:
a step of detecting, by a vibration sensor (150) provided in the vehicle (100), vibration that the vehicle receives;
a step of comparing a vibration pattern of the vibration detected by the vibration sensor with a reference pattern set in advance; and
a step of controlling traveling of the vehicle based on a result of comparing the vibration pattern with the reference pattern.
